Europäisches Patentamt

(19) European Patent Office

Office européen des brevets

(11) Numéro de publication: **0 214 903**
**A1**

# (12) DEMANDE DE BREVET EUROPEEN

(21) Numéro de dépôt: 86401843.7

(22) Date de dépôt: 19.08.86

(51) Int. Cl.⁴: **G 01 N 1/20**

(30) Priorité: 19.08.85 FR 8512650

(43) Date de publication de la demande:
18.03.87 Bulletin 87/12

(84) Etats contractants désignés: **DE GB IT NL**

(71) Demandeur: **COOPERATIVE AGRICOLE LA NOELLE ANCENIS, en abrégé CANA**
**La Noelle**
**F-44150 Ancenis (FR)**

(72) Inventeur: **Andree, Jean-Yves**
**Pont Noé**
**F-44530 Saint Gildas Des Bois (FR)**

**Beautrais, Alexandre**
**La Mabonnière**
**F-44150 Oudon Par Ancenis (FR)**

**Coraboeuf, Michel**
**rue Bel Air**
**F-44530 Saint Gildas des Bois (FR)**

(74) Mandataire: **Phélip, Bruno et al**
**c/o Cabinet Harlé & Phélip 21, rue de la Rochefoucauld**
**F-75009 Paris (FR)**

(54) **Perfectionnement aux dispositifs de prélèvement automatique d'échantillons.**

(57) Dispositif de prélèvement automatique d'échantillons, dans un courant de produit fluide, constitué d'un fourreau 1, solidaire de la conduite 3 d'acheminement du produit, et dans lequel coulisse un ensemble constitué d'une chemise 4 et d'un tiroir 10 situé dans ladite chemise. Le tiroir 10 comporte une cavité verticale 11 recevant l'échantillon ; cette cavité se remplit à travers l'orifice supérieur 12 de la chemise et se vide au-dessus de l'orifice de vidange 30 du fourreau 1, à travers l'orifice inférieur 13 de la chemise 4 ; les deux orifices 12 et 13 sont décalés longitudinalement.

Le mouvement de va et vient du tiroir 10 entre le prélèvement et la vidange est partiellement communiqué à la chemise 4 au moyen d'un organe élastique 18 ; la course du tiroir 10 étant supérieure à la course de la chemise 4, d'une distance égale à l'entr'axe des orifices 12 et 13.

fig.1.

**Description**

PERFECTIONNEMENT AUX DISPOSITIFS DE PRELEVEMENT AUTOMATIQUE D'ECHANTILLONS

La présente invention concerne un perfectionnement aux dispositifs de prélèvement automatique d'échantillons dans un courant de produit fluide.

Actuellement, on est capable de mettre en oeuvre les moyens les plus sophistiqués pour réaliser des analyses d'échantillons de produits fluides du type granulé, pulvérulent ou poudreux, utilisés dans des industries diverses et notamment celles qui sont liées à l'alimentation et à l'agriculture.

Malgré cela, il arrive encore de déplorer des erreurs importantes et des dérives très nettes entre les résultats obtenus par l'analyse du ou des échantillons, et les résultats qui découlent de la réalité des produits.

D'une manière générale, ces erreurs et cette dérive sont imputables à la mauvaise représentativité de l'échantillon prélevé dans un lot souvent très important, de produit.

C'est ainsi que l'on a tenté de développer des dispositifs de prélèvement automatique d'échantillons plus représentatifs en effectuant un ou plusieurs prélèvements sur le lot, dans une conduite, au cours de son transfert entre deux silos ou entre un véhicule de transport et le silo et inversement.

Un dispositif de prélèvement de ce type est décrit dans le brevet US-2.683.373. Ce dispositif est constitué d'un tiroir cylindrique qui pénètre à l'horizontale, dans la conduite où circule le produit ; ce tiroir comporte une cavité orientée vers le bas pour pénétrer dans la conduite ; il est retourné en fin de course pour remplir ladite cavité et il est ensuite retiré à l'extérieur où il déverse l'échantillon dans un collecteur en se retournant de nouveau en fin de course. Les différents mouvements du tiroir sont obtenus par une rainure de guidage, sur le poussoir du tiroir, laquelle rainure coopère avec un doigt solidaire du bâti.

Un autre dispositif de prélèvement est décrit dans le brevet FR-A 2 258 108. Ce dispositif est fixé sur la conduite de transfert du produit et il comporte une sonde de prélèvement, en forme de cuillère animée d'un mouvement de va-et-vient entre la position de prélèvement de l'échantillon, dans la conduite, et la position de déchargement dudit échantillon, à l'extérieur de la conduite, dans un flacon collecteur. Entre ces deux positions extrêmes, la sonde est également soumise à un mouvement de retournement pour vider le contenu de la cavité qui reçoit l'échantillon et, dans le même temps, ladite cavité est découverte ou obturée par une enveloppe disposée autour de la sonde. Une double commande par vérins permet d'assurer les différents mouvements relatifs de la sonde et de son enveloppe, en coopération avec des rainures et des ergots disposés sur lesdites sondes et enveloppes.

Ces dispositifs ne perturbent pas l'écoulement du produit dans la conduite sauf pendant le temps, relativement court, de prélèvement de l'échantillon. La sonde et son enveloppe sont situées normalement à l'extérieur de la conduite, dans un support fixé à la conduite et qui assure leur guidage en translation. On n'effectue généralement avec ces dispositifs, qu'une ou un nombre très limité de prises d'échantillons sur un même lot de produit ; chaque prise de produit est relativement importante et prétend suffire aux besoins de l'analyse d'un échantillon représentatif.

Les conditions dans lesquelles s'effectue le prélèvement de l'échantillon sont en effet très dures ; l'abrasion du produit pendant son transfert est telle qu'il est difficile d'effecteur un nombre important de prélèvements avec l'appareillage connu ; il se détériore rapidement au niveau des joints et du système mécanique de retournement ; il devient très vite une source de poussière. A cela, s'ajoute le fait que les échantillons prélevés sont parfois souillés par des poussières stagnantes provenant des produits précédents.

Ces difficultés ont conduit, comme dans le dernier brevet cité ci-dessus, à effectuer des prélèvements dans des zones où la vitesse du produit est faible voire nulle, au point d'opérer dans une masse statique, ce qui peut alors présenter l'inconvénient de provoquer des engorgements. Une solution à ce dernier problème est notamment décrite dans le certificat d'addition n° 2.288.307. qui montre un moyen permettant d'effectuer le prélèvement dans une masse statique sans risquer de provoquer une obturation complète de la conduite.

Les matériels existants, qui ne sont en fait qu'une adaptation mécanique des dispositifs de prélèvement manuels, ne sont pas véritablement adaptés pour réaliser des cadences élevées de prélèvements, dans un flux de produit en mouvement.

Le but de l'invention est de réaliser des prélèvements unitaires de volume réduit, mais en très grand nombre, pendant le transfert du produit, même si ce transfert, s'effectue à un débit élevé, et sans le stopper.

Le dispositif de prélèvement décrit dans le brevet FR-A-2.495.322 est constitué d'une chemise mobile animée d'un mouvement de va-et-vient pour pénétrer à l'intérieur de la conduite où circule le produit à échantillonner. L'extrémité de l'enveloppe est creuse et constitue une chambre d'échantillonnage avec deux orifices disposés en tandem : l'un pour le remplissage de la chambre, l'autre pour la vidange. La chambre est délimitée par un piston dont le rôle est de permettre d'une part, le remplissage de la chambre d'échantillonnage et, d'autre part, la vidange de cette même chambre. La chemise et le piston sont commandés séparément au moyen de deux vérins concentriques asservis.

L'invention propose un dispositif de prélèvement compact présentant une plus grande simplicité au niveau des moyens de commande des mouvements de l'équipage mobile qui pénètre dans la conduite où circule le produit à échantillonner.

L'invention propose encore un dispositif d'une très grande robustesse conçu également pour pouvoir, en cas d'incident, être très facilement démonté, réparé ou être remplacé sans perturber le transfert du produit dans la conduite et surtout, sans nuire de façon irrémédiable à la prise d'échantillons compte-tenu du temps très court nécessaire à une intervention.

Selon l'invention, le dispositif de prélèvement d'échantillons dans un courant de produit fluide acheminé par une conduite, est du type constitué d'un fourreau fixé sur ladite conduite et à l'intérieur duquel sont disposés : un tiroir comportant une cavité de réception de l'échantillon et mobile sous l'effet d'un organe de manoeuvre séquentiel, et une chemise mobile également intercalée entre le fourreau et le tiroir ; l'ensemble chemise-tiroir étant animé d'un mouvement de va-et-vient entre une position de prélèvement de l'échantillon à l'intérieur de la conduite d'acheminement du produit et une position de déchargement du produit dans un collecteur situé à l'extérieur de ladite conduite, sous le fourreau ; ce dispositif est caractérisé en ce qu'il comporte d'une part, une chemise munie de deux orifices décalés longitudinalement :

- un orifice supérieur, pour le chargement de la cavité du tiroir ;

- un orifice inférieur, pour le déchargement de la cavité du tiroir, disposé en retrait de l'orifice supérieur par rapport à la conduite d'acheminement du produit ; l'entr'axe entre les deux orifices de la chemise étant égal à la course du tiroir par rapport à ladite chemise ; et, d'autre part, un tiroir traversé par une cavité verticale coopérant avec les deux orifices de la chemise ; ce tiroir étant mobile longitudinalement dans la chemise et rendu solidaire de celle-ci par un organe élastique disposé à l'intérieur de ladite chemise entre une collerette de celle-ci et la face arrière du tiroir orientée vers l'extérieur de la conduite ; cet organe élastique, en forme de ressort hélicoïdal, assurant, en position normale, le maintien de la cavité du tiroir sous l'orifice supérieur de la chemise, en le pressant contre une butée disposée à l'extrémité de la chemise du côté de la conduite, et assurant, lors du retrait du tiroir de la conduite après prélèvement de l'échantillon, l'entraînement de ladite chemise dans le fourreau, jusqu'à une butée disposée à l'intérieur du fourreau et destinée à arrêter la chemise lorsque son orifice inférieur est à l'aplomb de l'orifice de vidange sur le fourreau.

Selon l'invention, l'ensemble constitué par le tiroir, la chemise et le ressort intercalé entre les deux, est mobile sous l'effet d'un vérin dont le corps est solidaire du fourreau et dont la tige est solidaire du tiroir ; la course du tiroir par rapport au fourreau est égale à la course de la tige du vérin ; la course de la chemise par rapport au fourreau est égale à la course du tiroir diminuée de l'entr'axe séparant les orifices supérieur et inférieur de ladite chemise.

Toujours selon l'invention, la chemise est immobilisée en rotation par rapport au fourreau et guidée en translation au moyen d'un ergot solidaire du fourreau qui coopère avec une rainure longitudinale à la partie supérieure de la chemise ; la rainure s'étend sur une longueur nécessaire à la course de la chemise.

Le tiroir est immobilisé en rotation par rapport au fourreau, et à la chemise, au moyen d'un décentrage du vérin par rapport à l'axe général du dispositif ; il comporte également, sur sa face externe, côté conduite, une forme en Vé coopérant avec la butée de la chemise pour assurer un calage précis de la cavité du tiroir par rapport à l'orifice supérieur de la chemise.

Pour permettre une vidange rapide et efficace du tiroir, la cavité est du type tronconique évasée vers le bas ; le diamètre d'entrée de la cavité étant fonction de la dimension des particules du produit à échantillonner.

Toujours selon l'invention, le tiroir comporte un joint annulaire d'étanchéité, en contact avec la paroi interne de la chemise, et disposé de façon à être en arrière de l'orifice de déchargement situé en partie basse de la chemise. De même un joint annulaire d'étanchéité est disposé à l'entrée du fourreau, en contact avec la chemise.

Selon une autre disposition de l'invention, la chemise est réalisée en un matériau du type acier comportant superficiellement, et au moins sur les parties en contact avec le produit à échantillonner, un revêtement du type chromage dur qui permet de résister à l'abrasion et d'améliorer l'étanchéité en coopération avec un joint disposé à l'entrée du fourreau.

Selon une autre disposition de l'invention, la bride fixant le fourreau sur le conduit, comporte, sur sa face tournée vers la conduite, un élément du type brosse, peigne ou lame de couteau, destiné à éliminer les produits qui débordent de la chemise au niveau de l'orifice de remplissage, afin de ne pas blesser le joint annulaire d'étanchéité disposé à l'entrée du fourreau.

Selon une autre disposition préférentielle de l'invention, le fourreau et le piston sont réalisés en un matériau plastique qui permet une auto-lubrification des pièces en mouvement et évite tout apport de lubrifiant.

Selon une autre disposition de l'invention, le fourreau est obturé à son extrémité par un flasque muni d'une valve qui s'ouvre lorsque la pression dans l'enceinte du fourreau est inférieure à la pression à l'extérieur dudit fourreau et se referme dès que la pression s'élève, lors du retrait du tiroir de la conduite après le prélèvement.

Pour des produits qui ont tendance à s'agglomérer, ou à "motter", le dispositif selon l'invention permet de réaliser une vidange forcée de la cavité du tiroir au moyen de l'air emprisonné et comprimé dans l'enceinte du fourreau.

Selon l'invention, la paroi interne de la chemise d'une part, comporte une cavité en forme de lumière, située dans le prolongement longitudinal et en arrière de l'orifice supérieur ; le tiroir d'autre part, comporte une conduite mettant en communication l'enceinte du fourreau avec la cavité du tiroir par l'intermédiaire de ladite lumière et cela lorsque ladite cavité du tiroir arrive à l'aplomb de l'orifice de vidange sur le fourreau.

Toujours selon l'invention, le vérin de manoeuvre de l'ensemble chemise-tiroir, est commandé par un système automatique qui comporte des moyens de mise en oeuvre d'un programme préétabli en fonction de l'importance du lot et de la nature du produit à analyser ; ce programme comportant une phase de rinçage du dispositif.

Selon une autre disposition de l'invention, le dispositif comporte des moyens disposés sous le fourreau pour orienter les produits prélevés lors du programme de rinçage, vers un collecteur indépendant du collecteur destiné aux échantillons à analyser.

L'invention sera mieux comprise à l'aide de la description et des dessins annexés. donnés à titre indicatif et dans lesquels :

- la figure 1 est une vue en coupe du dispositif de prélèvement selon l'invention, dans la position normale de chargement ;

- les figures 2, 3. 3a et 4 représentent de façon schématique le dispositif de prélèvement au cours des phases essentielles de son fonctionnement, à savoir :

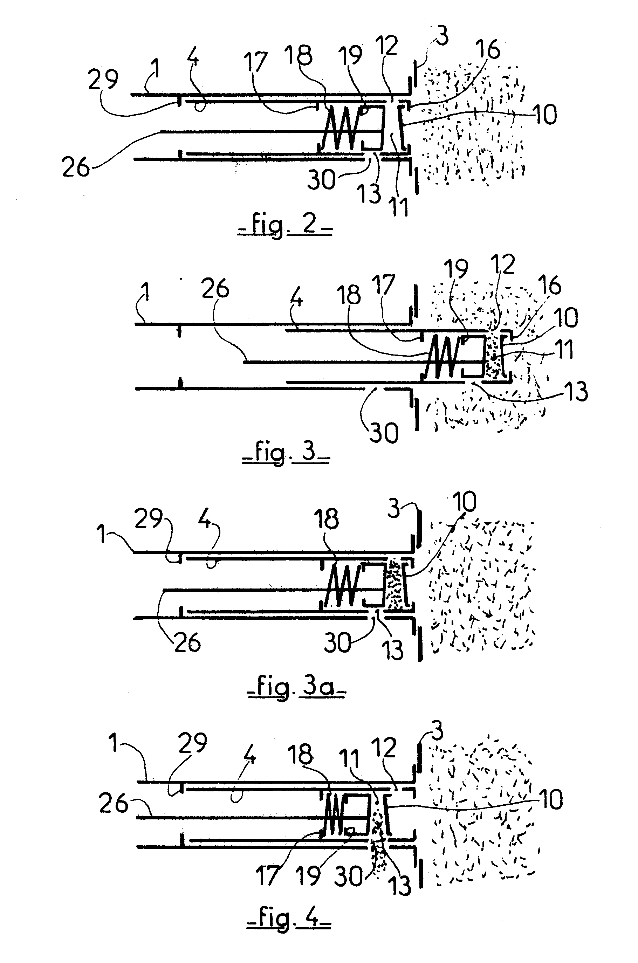

. la position d'origine ou de repos figure 2,

. le chargement figure 3,

. le retrait du dispositif figure 3a.

. le déchargement figure 4.

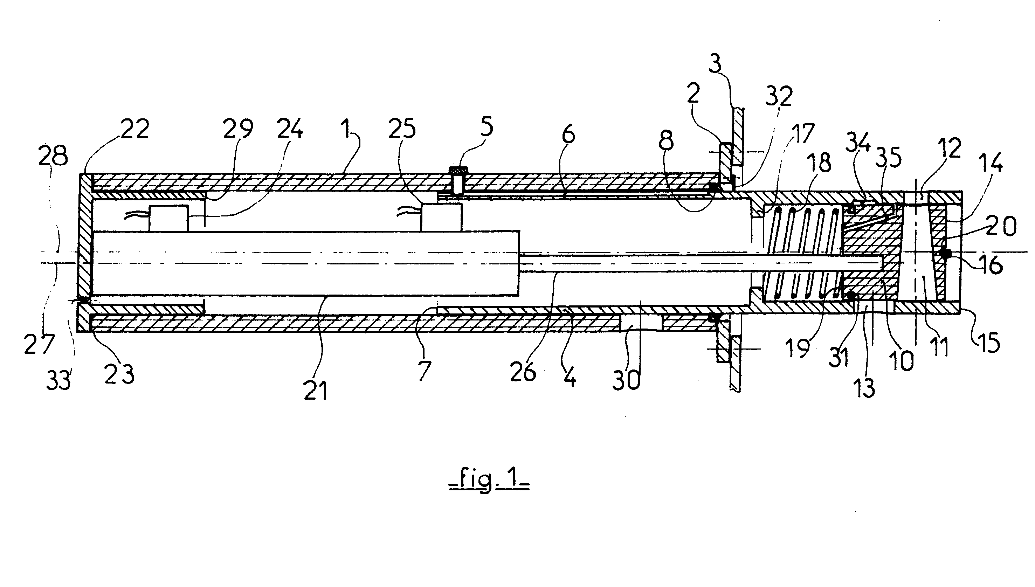

Tel que représenté figure 1, le dispositif de prélèvement d'échantillons est constitué d'un fourreau cylindrique 1, solidaire, par l'intermédiaire d'une bride de fixation 2. de la conduite 3 dans laquelle circule le produit. Ce fourreau 1 renferme une chemise cylindrique 4 dont il assure le guidage en translation. La chemise 4 est immobilisée en rotation. par rapport au fourreau 1, au moyen d'un ergot 5 solidaire du fourreau 1 et qui pénètre dans une rainure longitudinale 6, de la chemise 4 ; ladite rainure 6 est disposée à la partie supérieure et s'étend de la partie arrière 7 de la chemise 4, sur une longueur nécessaire à la course de ladite chemise.

Un joint d'étanchéité 8 en contact avec la chemise 4 est disposé à l'entrée du fourreau 1, il est maintenu en position dans son logement par la bride 2.

Lorsque la chemise 4 déborde dans la conduite 3, comme représenté figure 1. la rainure 6 n'atteint pas le joint 8 : elle reste légèrement en retrait pour ne pas le blesser.

La chemise 4 est réalisée en un matériau particulièrement résistant à l'abrasion ; de préférence, elle est réalisée en acier et reçoit, extérieurement, un traitement superficiel du type chromage dur qui offre par ailleurs une très bonne qualité de surface pour le joint 8.

La chemise 4 renferme et guide un tiroir cylindrique 10 mobile longitudinalement. Ce tiroir 10 comporte une cavité verticale 11 qui traverse le tiroir de part en part et qui est destinée à recevoir l'échantillon de produit. Cette cavité 11 du tiroir se remplit grâce à un orifice de chargement 12 disposé à la partie supérieure de la chemise 4 et se vide grâce à un orifice de déchargement 13 disposé à la partie inférieure de ladite chemise.

L'orifice 13 est en retrait de l'orifice 12, vers l'extérieur de la conduite 3 et l'entr'axe entre ces deux orifices est égal à la course du tiroir 10 dans et par rapport à la chemise 4.

La cavité 11 est obturée par la chemise, à sa partie basse, lorsqu'elle se situe. cette cavité 11, sous l'orifice de remplissage 12 de ladite chemise.

Lorsque la cavité 11 se situe au-dessus de l'orifice 13 de déchargement. le tiroir 10 découvre l'orifice 12 qui peut alors se vider ; les produits restant dans l'épaisseur de l'orifice 12 tombent dans l'espace-avant de la chemise et sont ensuite repoussés dans la conduite 3, par la face 14 du tiroir 10 lorsqu'il reprend sa course vers l'avant.

La chemise 4 comporte, à l'extrémité 15 de sa partie débordante dans la conduite 3, une butée 16 sur laquelle le tiroir 10 est normalement en appui. Cette butée est en forme de goupille, disposée horizontalement selon un diamètre. Dans cette position, la cavité 11 du tiroir 10 est centrée sur l'orifice 12 de chargement, situé à la partie supérieure de la chemise 4.

A mi-longueur environ et à l'intérieur, la chemise 4 comporte une collerette 17 servant d'appui à un ressort hélicoïdal 18 disposé entre ladite collerette 17 et la face arrière 19 du tiroir 10 ; ce ressort 18 maintient le tiroir 10 en appui contre la butée 16 disposée à l'extrémité 15 de la chemise 4. Pour bien mettre en concordance l'orifice supérieur de la cavité 11 avec l'orifice 12 de la chemise 4, la face 14 dudit tiroir 10, du côté de la conduite 3, comporte une rainure horizontale en Vé 20, qui coopère avec la butée 16.

L'ensemble formé par la chemise 4, le tiroir 10 et le ressort disposé entre les deux, coulisse à l'intérieur du fourreau 1 sous l'effet d'un organe de manoeuvre constitué d'un vérin 21 situé également dans le fourreau 1.

La partie antérieure de ce vérin 21 est fixée sur un flasque 22 qui obture l'extrémité 23 du fourreau 1. Ce vérin 21 est du type vérin pneumatique et il comporte des capteurs de fin de course 24 et 25 disposés au-dessus du corps proprement dit du vérin 21, à chaque extrémité. Le vérin 21 est alimenté par une centrale de commande pneumatique non représentée. La partie avant du vérin pénètre à l'intérieur de la chemise 4, de même que la tige 26 dudit vérin 21 dont l'extrémité est solidaire du tiroir 10.

L'axe longitudinal 27 du vérin 21 ne coïncide pas avec l'axe longitudinal 28 du fourreau 1, de la chemise 4, du tiroir 10 ; il est disposé légèrement en-dessous pour réaliser une immobilisation partielle en rotation du tiroir 10 par rapport à la chemise 4.

Le flasque 22 comporte une collerette cylindrique 29 qui permet le centrage dudit flasque par rapport au fourreau 1 et qui s'étend à l'intérieur du fourreau 1 pour constituer une surface d'appui sur laquelle vient buter l'extrémité 7 de la chemise 4 lors de son retrait à l'intérieur du fourreau 1. Lorsque la chemise 4 est en butée sur la collerette 29, son orifice inférieur 13 est positionné au-dessus de l'orifice 30 débouchant sous le fourreau 1, en retrait de la bride de fixation 2. Cet orifice 30 permet l'évacuation de l'échantillon vers un collecteur, non représenté.

La distance séparant ladite collerette 29 de l'orifice de vidange 30 est égale à la distance séparant l'orifice inférieur 13 de la chemise 4. de l'extrémité arrière 7 de celle-ci.

Le tiroir 10 comporte un joint annulaire d'étanchéité 31 en contact avec la paroi interne de la chemise 4 ; ce joint 31 est situé en arrière de l'orifice 13 de la chemise, du côté du ressort 18.

La bride 2 comporte, sur sa face interne tournée vers l'intérieur de la conduite 3, un élément 32 du type brosse, peigne ou lame de couteau, solidaire de ladite bride 2. Cet élément 32 épouse la forme de la chemise 4 sur une longueur légèrement supérieure au diamètre de l'orifice 12, afin d'arraser les particules de produits débordant de la surface de la chemise 4 et d'éviter ainsi toute détérioration du joint 8.

Le fourreau 1 et le tiroir 10 sont, de préférence, réalisés en matériau plastique dont les qualités permettent un fonctionnement du dispositif sans lubrification.

Pour améliorer la vidange de la cavité 11, celle-ci sera de préférence de forme tronconique, évasée vers le bas.

A titre d'exemple, pour des produits de l'alimentation animale comme les produits en farine ou en granulés (inférieurs à 8mm), le tiroir 10 a été dimensionné comme suit : son diamètre est de 70 mm, l'entrée de la cavité 11 a un diamètre qui correspond à 18 mm, identique à celui de l'orifice 12 de la chemise, la partie basse de la cavité a un diamètre de 20 mm ; l'angle au sommet de la forme en tronc de cône de la cavité 11 est de l'ordre de 5°.

Le volume de la cavité 11 ainsi dimensionné, permet d'obtenir une prise de 10 à 15 g pour un produit dont la densité est aux alentours de 0,6.

Dans le cas de l'échantillonage d'un produit pulvérulent très fin, ayant tendance à s'agglomérer, il peut être intéressant d'utiliser la pression qui règne dans l'enceinte du fourreau 1 lors du retrait du tiroir 10 et de la chemise 4, du conduit 3, pour agir sur l'échantillon, lorsqu'il arrive au-dessus des orifices 13 et 30. A cet effet, le flasque 22 est muni d'une valve 33 qui s'ouvre lorsque la pression qui règne dans l'enceinte du fourreau 1 est inférieure à la pression à l'extérieur dudit fourreau, et se ferme dès lors que la pression s'élève, sous l'effet du retrait du tiroir 10 et de la chemise 4.

L'air comprimé est envoyé au-dessus de l'échantillon contenu dans la cavité 11 au moyen d'une creusure, en forme de lumière 34, disposée dans la paroi interne de la chemise 4, longitudinalement et qui s'étend sensiblement de l'aplomb de l'orifice 13 jusqu'au joint 31 du tiroir 10 ; cette lumière 34 est masquée par ledit tiroir lorsque celui-ci est en position normale, c'est-à-dire lorsque sa cavité 11 est disposée sous l'orifice 12.

Le tiroir 10 comporte, dans son épaisseur et en arrière de la cavité 11, un conduit 35 qui part de la face arrière 19 et débouche à la périphérie supérieure dudit tiroir 10, de façon que, lorsque le tiroir 10 est en retrait, il débouche dans la lumière 34 mettant ainsi en communication l'enceinte du fourreau 1 et la partie supérieure de la cavité 11 ; l'air comprimé contenu dans l'enceinte du fourreau propulse l'échantillon hors de la cavité 11 du tiroir.

Le fonctionnement du dispositif de prélèvement est illustré par les figures 2, 3, 3a et 4. Le dispositif est représenté figure 2 en position normale d'origine c'est-à-dire que : la cavité 11 du tiroir 10 est située sous l'orifice de remplissage 12 de la chemise ; le ressort hélicoïdal 18 est en expansion entre la collerette 17 de la chemise et le tiroir 10, pressant ce dernier contre la butée disposée à l'extrémité de la chemise ; cette dernière est totalement disposée dans le fourreau 1, et son orifice de déchargement 13 est au-dessous de l'orifice de vidange 30 : le vérin 21 est à la pression atmosphérique. Dans cette position, le dispositif ne déborde pas dans la conduite 3 et ne constitue pas un obstacle au passage des produits qui y circulent.

Figure 3, le dispositif est représenté en position normale de prélèvement de l'échantillon dans le courant de produit qui circule dans la conduite 3. Cette position de prélèvement est atteinte au moyen du vérin 21 dont la tige 26 pousse le tiroir 10 et, indirectement grâce au ressort, la chemise 4, hors du fourreau 1, à l'intérieur de la conduite 3. Dans cette position, la cavité 11 du tiroir 10 est découverte en haut grâce à l'orifice 12 de la chemise 4, disposé à l'aplomb, et elle est obturée en bas par la chemise 4. L'orifice 13 de la chemise 4 est obturé par le tiroir 10 qui s'étend sur toute la superficie dudit orifice 13. De la même façon, l'orifice 30 du fourreau 1 est obturé par la chemise 4.

Le remplissage de la cavité 11 est très rapide, compte tenu de sa faible capacité ; le tiroir 10 est alors rétracté par la tige 26 du vérin et il entraîne, dans son mouvement de retrait, la chemise 4, grâce à l'action du ressort 18 qui solidarise ledit tiroir 10 et ladite chemise 4.

Le dispositif est représenté, figure 3a, dans une position intermédiaire rétractée. La chemise 4 et le tiroir 10 sont à l'intérieur du fourreau 1. La cavité 11 contient toujours son échantillon de produit ; elle est toujours obturée par la partie inférieure de la chemise 4. Dans cette position, l'extrémité 7 de la chemise 4 arrive en butée sur la collerette 29 à l'extrémité du fourreau 1, et l'orifice 13 de ladite chemise est à l'aplomb de l'orifice de vidange 30 du fourreau 1. Cette position intermédiaire est atteinte au cours du retrait du tiroir 10 après prélèvement de l'échantillon, sous l'effet de la traction exercée par la tige 26 du vérin 21 et ce retrait se termine, comme représenté figure 4, lorsque la cavité 11 parvient à l'aplomb des orifices 13 de la chemise 4 et 30 du fourreau 1. Dans cette dernière partie de la course du tiroir 10, le ressort 18 est comprimé par le tiroir qui se déplace alors dans la chemise 4 immobilisée dans le fourreau 1; et c'est au cours de ce déplacement que la cavité 11 passe de l'orifice 12 de chargement à l'orifice 13 de déchargement. La vidange de la cavité 11 du tiroir 10, vers un collecteur, non représenté, s'effectue par gravité et elle est facilitée par la forme tronconique évasée vers le bas de ladite cavité 11, et éventuellement par le transport de pression que permettent la lumière 34 et le conduit 35. Cette vidange est très rapide et le vérin 21 entre en action immédiatement pour le prélèvement suivant d'un échantillon dans la conduite 3. Lors de ce mouvement inverse. le tiroir 10 reprend tout d'abord sa position normale dans la chemise 4, c'est-à-dire contre la butée 16 disposée à l'extrémité de la chemise 4, du côté de la conduite 3 et, partant de cette position, le tiroir 10 entraîne la chemise 4 dans la conduite 3. La chemise 4 assure une protection totale du tiroir 10 dans la conduite 3.

La course totale du tiroir 10 par rapport au fourreau 1 est égale à la course de la tige 26 du vérin 21 : la course du tiroir 10 par rapport à la chemise 4 se limite à l'espace qui sépare les deux orifices 12 et 13 de ladite chemise 4 ; la course de la chemise 4 par rapport au fourreau 1 est égale à la course de la tige 26 du vérin 21 diminuée de la course du tiroir 10 par rapport à ladite chemise 4.

Le vérin est alimenté par une centrale pneumatique commandée au moyen d'un système automatique : armoire électrique classique, ou carte électronique.

Ce système automatique commande directement l'électrovanne pneumatique du vérin 26 et contrôle le fonctionnement de ce dernier au moyen des détecteurs de fin de course 24 et 25 disposés sur le corps du vérin. Il met en oeuvre un programme préétabli en fonction de l'importance du lot et de la nature du produit à analyser, et ce programme comporte une phase de rinçage du dispositif de prélèvement et plus particulièrement de la cavité 11 du tiroir 10, ainsi que des différents orifices allant des orifices 12 et 13 de la chemise, à l'orifice 30 du fourreau 1. Le programme de rinçage est nécessaire lorsque le dispositif de prélèvement est installé, par exemple, sur une conduite de remplissage de silo ou de camion, laquelle peut servir pour de nombreux produits de nature ou de formulation différente. En toute logique ce rinçage devrait toujours être effectué pour éviter le mélange des particules du lot à échantillonner avec des particules du lot précédent. Le produit prélevé pour ce rinçage est évacué par l'orifice 30 du fourreau 1 et il est orienté automatiquement par tous moyens appropriés du type dérivation, vers un collecteur, non représenté, indépendant du collecteur destiné aux échantillons de produit à analyser. Après les quelques prélèvements de rinçage, programmés, le dispositif fonctionne à la fréquence calculée pour effectuer tous les prélèvements nécessaires à la constitution d'un échantillon représentatif du lot qui a transité dans la conduite 3.

**Revendications**

1.- Dispositif de prélèvement d'échantillons dans un courant de produit fluide circulant dans une conduite (3), du type constitué d'un fourreau (1) fixé sur ladite conduite et à l'intérieur duquel sont disposés : un tiroir (10) comportant une cavité de réception de l'échantillon et mobile sous l'effet d'un organe de manoeuvre séquentiel, et une chemise (4) mobile également, intercalée entre le fourreau (1) et le tiroir (10) ; l'ensemble chemise-tiroir étant animé d'un mouvement de va et vient entre une position de prélèvement de l'échantillon à l'intérieur de la conduite (3) et une position de déchargement du produit dans un collecteur situé à l'extérieur de ladite conduite (3), sous le fourreau (1), caractérisé en ce que le tiroir (10) est mobile longitudinalement dans la chemise (4) et rendu solidaire de cette dernière par un organe élastique (18) disposé à l'intérieur de ladite chemise (4), entre une collerette (17) de celle-ci et la face arrière (19) du tiroir.

2.- Dispositif de prélèvement d'échantillons selon la revendication 1, caractérisé en que le tiroir (10) est traversé par une cavité (11) verticale coopérant avec deux orifices (12 et 13) décalés longitudinalement sur la chemise (4) :
- un orifice supérieur (12), pour le chargement de la cavité (11) du tiroir (10),
- un orifice inférieur (13), pour le déchargement de ladite cavité (11) du tiroir (10), cet orifice inférieur (13) étant disposé en retrait de l'orifice supérieur (12) par rapport à la conduite (3) d'acheminement du produit ;
l'entr'axe entre les deux orifices (12 et 13) de la chemise (4) étant égal à la course du tiroir (10) dans ladite chemise (4).

3.- Dispositif de prélèvement d'échantillons selon l'une quelconque des revendications 1 ou 2, caractérisé en ce que l'organe élastique (18) est un ressort hélicoïdal disposé à l'intérieur de la chemise (4) ; ce ressort (18) assurant, en position normale, le maintien de la cavité (11) du tiroir (10) sous l'orifice supérieur (12) de la chemise (4) et l'entraînement de ladite chemise lors du retrait du tiroir (10) de l'intérieur de la conduite (3).

4.- Dispositif de prélèvement d'échantillons, selon l'une quelconque des revendications 1 à 3, caractérisé en ce que le fourreau (1) renferme une collerette (29) servant de butée alors de son retrait à la chemise (4) ; la distance séparant ladite collerette (29) de l'orifice de vidange (30) étant égale à la distance séparant l'orifice inférieur (13) de la chemise (4) de l'extrémité arrière de celle-ci, du côté opposé à la conduite (3).

5.- Dispositif de prélèvement d'échantillons, selon l'une quelconque des revendications 1 à 4, caractérisé en ce que l'ensemble constitué par le tiroir (10), la chemise (4) et le ressort (18) disposé entre les deux, est mobile sous l'effet d'un vérin (21) dont la tige (26) est solidaire du tiroir (10) ; la course du tiroir (10) par rapport au fourreau (1) est égale à la course de la tige (26) du vérin (21) : la course de la chemise (4) par rapport au fourreau (1) est égale à la course du tiroir (10) diminuée de l'entr'axe séparant les orifices supérieur (12) et inférieur (13) de ladite chemise (4).

6.- Dispositif de prélèvement d'échantillons selon l'une quelconque des revendications 1 à 5, caractérisé en ce que la chemise (4) est immobilisée en rotation par rapport au fourreau (1), et guidée en translation au moyen d'un ergot (5) solidaire du fourreau (1), qui coopère avec une rainure longitudinale (6) située à la partie supérieure de ladite chemise (4).

7.- Dispositif de prélèvement d'échantillons selon l'une quelconque des revendications 5 ou 6, caractérisé en ce que le tiroir (10) est immobilisé en rotation par rapport au fourreau (1), et à la chemise (4), au moyen d'un décentrage du vérin (21) par rapport à l'axe général (28) du dispositif.

8.- Dispositif de prélèvement d'échantillons selon la revendication 7, caractérisé en ce que le tiroir (10) comporte, sur sa face (14) côté conduite (3), une forme (20) en Vé coopérant avec une butée (16) en forme de goupille disposée horizontalement à l'extrémité de la chemise (4) afin d'immobiliser le tiroir (10) à l'extrémité de ladite chemise et d'assurer un calage précis de la cavité (11) du tiroir (10) par rapport à l'orifice supérieur (12) de la chemise (4).

9.- Dispositif de prélèvement d'échantillons selon l'une quelconque des revendications 1 à 8, caractérisé en ce que la cavité (11) du tiroir (10) est du type tronconique évasée vers le bas.

10.- Dispositif de prélèvement d'échantillons selon l'une quelconque des revendications 1 à 9, caractérisé en ce que la chemise (4) est réalisée en un matériau du type acier comportant superficiellement, et au moins sur les parties en contact avec le produit à échantillonner, un revêtement du type chromage dur permettant de résister à l'abrasion et d'améliorer l'étanchéité en coopération avec un joint (8) disposé à l'entrée du fourreau (1).

11.- Dispositif de prélèvement d'échantillons selon l'une des revendications 1 à 10, caractérisé en ce que la bride (2) comporte, sur sa face tournée vers la conduite (3), un élément (32) en forme de brosse, peigne ou lame de couteau, destiné à éliminer les produits qui débordent de la chemise (4), au niveau de l'orifice de remplissage (12), afin de ne pas blesser le joint annulaire d'étanchéité (8) disposé à l'entrée du fourreau (1)

12.- Dispositif de prélèvement d'échantillons selon l'une quelconque des revendications 1 à 11, caractérisé en ce que le fourreau (1) et le tiroir (10) sont réalisés en un matériau plastique permettant une auto-lubrification du dispositif et évitant tout apport de lubrification.

13.- Dispositif de prélèvement d'échantillons selon l'une quelconque des revendications 1 à 12, caractérisé en ce que le fourreau (1) est obturé à son extrémité (23) par un flasque (22) muni d'une valve (33) qui s'ouvre lorsque la pression dans l'enceinte du fourreau est inférieure à la pression à l'extérieur dudit fourreau et se referme dès que la pression s'élève, lors du retrait du tiroir (10) de la conduite (3).

14.- Dispositif de prélèvement d'échantillons selon la revendication 13, caractérisé en ce que, d'une part, la paroi interne de la chemise (4) comporte une lumière (34) située dans le prolongement longitudinal et en arrière de l'orifice supérieur (12) et en ce que, d'autre part, le tiroir (10) comporte une conduite (35) destinée à mettre en communication l'enceinte du fourreau (1) avec la cavité (11) dudit tiroir (10), par l'intermédiaire de ladite lumière (34), lorsque ladite cavité du tiroir est à l'aplomb de l'orifice de vidange (30).

15.- Dispositif de prélèvement d'échantillons selon l'une quelconque des revendications 1 à 14, caractérisé en ce que le vérin (21) est commandé par un système automatique qui comporte des moyens de mise en oeuvre d'un programme préétabli en fonction de l'importance du lot et de la nature du produit à analyser, ce programme comportant une phase de rinçage du dispositif.

fig. 1

_fig. 2_

_fig. 3_

_fig. 3a_

_fig. 4_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | FR-A-2 495 322 (EUR-CONTROL KALLE AB) <br> * Page 1, lignes 1-12; page 3, ligne 22 - page 4, ligne 4; page 4, ligne 18 - page 5, ligne 12; page 6, ligne 9 - page 7, ligne 32; figures 1,3 * | 1 | G 01 N 1/20 |
| D,A | | 2 | |
| | --- | | |
| P,Y | US-A-4 562 749 (CLARK) <br> * Colonne 1, ligne 58 - colonne 2, ligne 21; colonne 6, lignes 45-55; colonne 7, ligne 56 - colonne 8, ligne 4; colonne 8, lignes 35-40, 45-51; figures 2-5 * | 1 | |
| P,A | * Colonne 4, lignes 15-25 * | 6 | DOMAINES TECHNIQUES RECHERCHES (Int. Cl.4) <br><br> G 01 N 1/00 |
| | --- | | |
| A | US-A-3 442 138 (W.C. HENSEL) <br> * Colonne 1, lignes 49-61; colonne 3, ligne 21 - colonne 4, ligne 21; colonne 5, lignes 25-56; figures 1,3 * | 1,2 | |
| | --- | | |
| A | US-A-4 475 410 (JAEGER) <br> * Colonne 4, lignes 7-38, ligne 63 - colonne 5, ligne 8; figures 1,2 * | 1 | |
| | ---      -/- | | |

Le présent rapport de recherche a été établi pour toutes les revendications

| Lieu de la recherche | Date d'achèvement de la recherche | Examinateur |
|---|---|---|
| LA HAYE | 14-11-1986 | FORMBY N.M. |

# RAPPORT DE RECHERCHE EUROPEENNE

**Office européen des brevets**

Numero de la demande

EP 86 40 1843

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| D,A | US-A-2 683 373 (GALLUP et TILLY) | | |
| | --- | | |
| A | GB-A-1 331 227 (BAIN et CLAMP) | | |
| | --- | | |
| A | US-A-4 024 765 (J. ABONNENC) | | |
| | ----- | | |

**DOMAINES TECHNIQUES RECHERCHES (Int. Cl.4)**

Le présent rapport de recherche a été établi pour toutes les revendications

| Lieu de la recherche | Date d'achèvement de la recherche | Examinateur |
|---|---|---|
| LA HAYE | 14-11-1986 | FORMBY N.M. |